# EUROPÄISCHE PATENTSCHRIFT

(11) **EP 2 098 837 B1**
(45) Veröffentlichungstag und Bekanntmachung des Hinweises auf die Patenterteilung: **28.07.2010**
(21) Anmeldenummer: 08152397.9
(22) Anmeldetag: 06.03.2008
(51) Int. Cl.: G01F 23/14, G05D 9/12

(54) **Verfahren und Vorrichtung zum Füllen eines Flüssigkeitstanks**
Method and device for filling a fluid tank
Procédé et dispositif destinés au remplissage d'un réservoir de liquide

(43) Veröffentlichungstag der Anmeldung: 09.09.2009
(73) Patentinhaber: Schweizerische Bundesbahnen SBB, 3000 Bern 65 (CH)
(72) Erfinder: Karch, Stefan, 4600 Olten (CH)
(74) Vertreter: Rutz & Partner

(56) Entgegenhaltungen:
- WO-A-01/61429
- DE-A1- 4 215 841

## Beschreibung

Die Erfindung betrifft ein Verfahren und eine Vorrichtung zum Füllen eines Flüssigkeitstanks, insbesondere eines in einem Transportfahrzeug, wie einem Eisenbahnwagen, vorgesehenen Flüssigkeitstanks, nach dem Oberbegriff von Anspruch 1 bzw. 10.

In Fahrzeugen, die dem Transport von Personen und Gütern dienen, sind oft Behälter bzw. Tanks vorgesehen, die mit einer Flüssigkeit, beispielsweise Wasser, gefüllt werden, das während der Fahrt insbesondere für den Betrieb sanitarischer Anlagen zur Verfügung steht. Damit in diesen Wagen genügend Frischwasser zur Verfügung steht, werden diese während Wartungsarbeiten normalerweise täglich neu gefüllt. Für eine Eisenbahngesellschaft bedeutet dies, dass durch das Personal täglich hunderte oder tausende von Flüssigkeitstanks neu gefüllt werden müssen, die normalerweise ein Volumen von mehreren 100 l aufweisen. Sofern das für diese Arbeit verantwortliche Wartungspersonal jeweils jeden einzelnen Tank befüllt, bis der Füllvorgang vollständig abgeschlossen ist, so resultiert bei der Wartung eines gesamten Wagenparks ein enormer Zeitaufwand. Sofern das Wartungspersonal jedoch die Tanks zahlreicher Eisenbahnwagen praktisch gleichzeitig füllt, so können die einzelnen Füllvorgänge kaum kontrolliert werden. Beispielsweise werden zahlreiche Füllvorgänge innerhalb kurzer zeitlicher Abstände in Gang gesetzt, indem Schläuche an die Tanks angeschlossen werden und die Wasserzufuhr gestartet wird. Dabei wird die Wasserzufuhr normalerweise erst unterbrochen, nachdem die Tanks bereits gefüllt und während einer oft beträchtlichen Dauer übergelaufen sind. Dadurch entstehen der Eisenbahngesellschaft jährlich erhebliche Verluste. Der Gesamtverlust von jährlich Tausenden von Kubikmetern Wasser bei diesen Füllvorgängen ist jedoch auch in ökologischer Hinsicht bedenklich. In Gegenden, in denen der Rohstoff Wasser ohnehin nur spärlich vorhanden ist, ist das geschilderte Problem daher umso gravierender.

In Gegenden, in denen im Sommer Wassermangel herrscht, erfolgen oft Wassertransporte, bei denen Wassertanks auf Eisenbahnen oder Lastwagen in die Not leidenden Gebiete transportiert werden. Auch in diesen Fällen wäre es wünschenswert, wenn die Wassertanks mit geringem Aufwand und ohne wesentliche Verluste aufgefüllt werden könnten.

Aus [1], US 5'336'054 ist eine Vorrichtung bekannt, welche geeignet ist, mehrere Tanks automatisch mit Wasser zu füllen, ohne dass ein Überlauf eintritt. Dieses System umfasst einen Pegel-Sensor, der das Erreichen eines bestimmten Wasserstandes signalisiert und der mit einer Steuereinheit gekoppelt ist, welche die der Wasserförderung dienenden Pumpen ausschaltet, sobald der erwünschte Wasserpegel erreicht ist. Die aus [1] bekannte Vorrichtung erfordert daher den Einsatz eines Sensors und einer Steuereinheit, die in den Tank eingebaut werden müssen. Dies erfordert hingegen erhebliche und kostenaufwändige Modifikationen der Transportvorrichtungen, was zumeist unerwünscht ist. Ferner können bei der Kommunikation zwischen der beim Wassertank angeordneten lokalen Steuereinheit und der mit der Förderpumpe verbundenen zentralen Steuereinheit Störungen auftreten, die es mit entsprechendem Aufwand zu vermeiden will.

Eine Vorrichtung, mittels der einige Nachteile der aus [1] bekannten Lösung vermieden, ist aus [2], JP 8127339 A bekannt. Insbesondere sind bei dieser Vorrichtung an Wassertanks keine Sensoren und Steuereinheiten vorzusehen, weshalb auch die Kommunikation mit einer zentralen Steuereinheit entfällt. Hingegen muss bei dieser Lösung das zu füllende Volumen bekannt sein und einer zentralen Steuereinheit eingegeben werden. Danach wird anhand eines Flussmeters die während des Füllvorgangs transferierte Wassermenge gemessen und der Transfer gestoppt, sobald die erforderliche Wassermenge transferiert wurde. Diese Vorrichtung befriedigt in vielen Fällen jedoch nicht. Oft sind der Tankinhalt und insbesondere bei teilweise gefülltem Tank die Restfüllmenge nicht bekannt. Sofern das Tankvolumen bekannt ist, der Tank jedoch bereits teilweise gefüllt ist, so führt der Transfer einer dem Tankvolumen entsprechenden Wassermenge nämlich wiederum zum Überlaufen des Tankes. Für das Wartungspersonal ergibt sich wiederum ein unerwünschter zusätzlicher Aufwand. Die Volumina der zu füllenden Tanks sind zu ermitteln und in die zentrale Steuereinheit einzugeben. Sofern ein Überlauf tatsächlich vermieden werden soll, ist der Restfüllstand zu ermitteln und die Restmüllmenge zu berechnen, die anschliessend in das Steuergerät einzugeben ist. Nebst dem zusätzlichen Aufwand ist zu beachten, dass es nicht möglich ist, Wartungspersonal für diese Arbeiten einzusetzen, ohne dass diesem der erforderliche Wissensstand vermittelt wird.

Aus [3], Freescale Semiconductor, Inc., Liquid Level Control Using a Pressure Sensor, Application Note AN1516, Rev. 4, 05/2005 ist ferner bekannt, dass der Flüssigkeitsdruck in einem Behälter gemessen werden kann, um den Füllstand in diesem Behälter durch entsprechende Steuerung einer Pumpe auf einen gewünschten Wert regeln zu können. Anstelle des Volumens des Tanks bzw. der entsprechenden Wassermenge, wie dies bei der Vorrichtung von [2] der Fall ist, muss bei der Vorrichtung von [3] bekannt sein, welchen Druck die Wassermenge verursacht, die dem zu füllenden Volumen entspricht. Wie bei der in [1] offenbarten Lösung wird der Sensor zusammen mit einer lokalen Steuereinheit wiederum innerhalb des Flüssigkeitstanks montiert, weshalb sich die Nachteile der Vorrichtungen von [1] und [2] bei der Vorrichtung von [3] summieren. Einerseits sind Modifikationen seitens des mit dem Tank versehenen Transportfahrzeugs erforderlich, andererseits muss der gesuchte und zu überwachende Druck experimentell oder rechnerisch ermittelt werden.

In [4], WO 01/61429 A1, ist eine dem Füllen eines Flüssigkeitstanks dienende Vorrichtung mit einer Transferleitung gezeigt, die an eine der Zufuhr von Flüssigkeit dienende Versorgungsleitung sowie an den Flüssigkeitstank anschliessbar und mit einem steuerbaren Stellglied, versehen ist, welches dem aktiven oder passiven Eingriff in den Flüssigkeitsstrom dient. In der Versorgungsleitung ist ein Drucksensor vorgesehen, der der Messung des Drucks der aus dem Stellglied austretenden Flüssigkeit dient und dessen Ausgangssignal über eine Messleitung einer Steuereinheit zuführbar ist, die zur Überwachung des Druckverlaufs geeignet ist und die über eine Steuerleitung mit dem Stellglied verbunden ist. Bei dieser Vorrichtung wird der Flüssigkeitsstand im Flüssigkeitstank anhand des gemessenen Druckes geschätzt und die Wasserzufuhr unterbrochen, sobald der geschätzte Wert einem Sollwert entspricht. Bei dieser Vorrichtung ist es daher erforderlich, dass der Sollwert des Flüssigkeitsstandes im Flüssigkeitstank bekannt ist. Dieser Sollwert, zu dem ein entsprechender Druck zu berechnen ist, muss daher jeweils ermittelt und in die Steuereinheit eingegeben werden, bevor der Füllvorgang gestartet wird. Ein Füllen von verschiedenen Flüssigkeitstanks, deren Fassungsvermögen nicht bekannt ist, ist mit dieser Vorrichtung nicht möglich.

In [5], DE4215841A1, ist eine Vorrichtung beschrieben, die der Steuerung der Befüllung eines Flüssigkeitsbehälters dient, an dessen Unterseite ein Druckrohranschluss einmündet. Dabei wird der Füllstand im Flüssigkeitsbehälter anhand von Sensoren gemessen und ein Füllventil geschlossen, sobald ein gewünschter Füllstand erreicht ist. Auch bei dieser Vorrichtung muss der zu füllende Flüssigkeitsbehälter daher mit Messvorrichtungen versehen sein.

Der vorliegenden Erfindung liegt daher die Aufgabe zu Grunde, eine Verfahren und eine Vorrichtung anzugeben, mittels derer Flüssigkeitstanks, insbesondere Wassertanks, zumindest teilweise automatisiert, praktisch ohne Verluste und mit geringem Aufwand gefüllt werden können.

Insbesondere sollen Tanks gefüllt werden können, deren Volumina oder Füllmengen nicht bekannt und die nicht mit lokalen Mess- und Steuereinheiten versehen sind.

Diese Aufgabe wird mit einem Verfahren und einer Vorrichtung gelöst, welche die in Anspruch 1 bzw. 10 angegebenen Merkmale aufweisen. Vorteilhafte Ausgestaltungen der Erfindung sind in weiteren Ansprüchen angegeben.

Die Vorrichtung, die dem Füllen eines Flüssigkeitstanks, insbesondere eines Wassertanks dient, weist eine Transferleitung auf,
a) die an eine der Zufuhr von Flüssigkeit dienende Versorgungsleitung anschliessbar ist,
b) die mit einem Stellglied, insbesondere einem Ventil oder einer Pumpe, versehen ist, welches dem aktiven oder passiven Eingriff in den Flüssigkeitsstrom dient, und
c) die vorzugsweise über Kopplungselemente an den Flüssigkeitstank anschliessbar ist.

Dabei ist ein Drucksensor vorgesehen, der der Messung des Drucks der aus dem Stellglied austretenden Flüssigkeit dient und dessen Ausgangssignal über eine Messleitung einer Steuereinheit zuführbar ist, die zur Überwachung des Druckverlaufs geeignet ist und die über eine Steuerleitung mit dem Stellglied verbunden ist.

Erfindungsgemäss betätigt die Steuereinheit das Stellglied nach der Detektion einer Phase ohne Druckänderung, um den Flüssigkeitstransfer zu beenden.

Das Wartungspersonal kann daher die Transferleitung an den Wassertank anschliessen und vorzugsweise über die Steuereinheit das Stellglied betätigen, so dass der Flüssigkeitstransfer beginnt. Beispielsweise erfolgt der Flüssigkeitstransfer durch die Einwirkung eines entsprechenden Drucks von der Versorgungsleitung. In diesem Fall ist das Stellglied lediglich dazu vorgesehen, die Strömung der Flüssigkeit freizugeben oder zu unterbrechen, worunter nachstehend ein passiver Eingriff verstanden wird, der vorzugsweise mittels eines von der Steuereinheit betätigten Ventils erfolgt. Alternativ kann als Stellglied auch eine Pumpe vorgesehen sein, die aktiv in den Flüssigkeitsstrom eingreift und diesen fördert. Die erfindungsgemässe Lösung kann jedoch unabhängig von der Art des Flüssigkeitstransfers vorteilhaft verwendet werden.

Der Flüssigkeitstransfer erfolgt nun so lange, bis die Steuereinheit eine signifikante Änderung des Druckverlaufs detektiert, die charakteristisch für Druckänderungen sind, die auftreten, wenn der Füllvorgang abgeschlossen ist oder wenn nur noch eine geringe Flüssigkeitsmenge in den Tank eingeführt werden kann. Solche signifikante Änderungen können beispielsweise ein Übergang von einem ansteigenden in einen konstanten Druckverlauf, ein Übergang von einem konstanten in einen aufsteigenden Druckverlauf oder ein Übergang von einem ansteigenden in einen steiler ansteigenden Druckverlauf. Durch die Steuereinheit sind daher insbesondere Änderungen der Steilheit des Druckverlaufs zu detektieren.

Nach der Detektion einer solchen Änderung betätigt die Steuereinheit das Stellglied und unterbricht damit automatisch den Flüssigkeitstransfer.

Nach dem Start des Flüssigkeitstransfers sind daher keine manuellen Eingriffe mehr erforderlich, weshalb sich das Wartungspersonal anderen Arbeiten widmen kann, ohne dass der Füllvorgang bis zu dessen Abschluss weiter überwacht werden müsste. Der Füllvorgang wird automatisch korrekt abgeschlossen, ohne dass ein störender Überlauf der Flüssigkeit eintritt. Durch die Vermeidung des Überlaufs der Flüssigkeit werden Verluste vermieden, die sich für den Anwender bis anhin zu signifikanten Geldbeträgen summiert haben.

Durch das Wartungspersonal müssen auch keine Daten der zu befüllenden Tanks oder der bereits darin enthaltenen Flüssigkeiten ermittelt und in die Steuereinheit eingegeben werden. Im Vergleich zu bekannten Lösungen erlaubt die erfindungsgemässe Vorrichtung eine wesentlich vereinfachte Bedienung.

Ferner entfällt die Montage einer Mess- und Steuerungsvorrichtung seitens des Flüssigkeitstanks.

Die Erfindung geht von der Erkenntnis aus, dass nach dem Füllen des Flüssigkeitstanks eine Änderung des Druckes auftritt, mit dem die Flüssigkeit in den Tank gefördert wird. Bekanntlich ist der Druck einer Flüssigkeitssäule bzw. Wassersäule nur von deren Höhe abhängig. Der Druck wird daher solange ansteigen, bis die maximale Höhe im Wassertank erreicht ist, anschliessend erfolgt eine Änderung des Druckverlaufs, die von der Steuereinheit mittels des Drucksensors erfasst werden kann. Beispielsweise bleibt der Druck nach Erreichen des Maximalwerts konstant. Dabei ist der absolute Wert des maximalen Drucks unwesentlich, weshalb die Erfindung bei allen möglichen Tanks angewendet werden kann. In der bevorzugtesten Ausgestaltung erfolgt die Flüssigkeitszufuhr in den Tank im Bereich des minimalen Flüssigkeitspegels, so dass der Druck bereits zu Beginn der Flüssigkeitszufuhr stetig ansteigt und nach Erreichen des Maximalpegels konstant bleibt oder steil ansteigt, falls der Behälter bzw. Tank verschlossen ist. Sofern die Flüssigkeitszufuhr zwischen dem minimalen und dem maximalen Flüssigkeitspegel erfolgt, so wird zu Beginn kein Anstieg des Drucks festgestellt, bis der Flüssigkeitspegel die Höhe erreicht, bei der die Flüssigkeitszufuhr erfolgt. Sofern die Flüssigkeitszufuhr nur wenig unterhalb des Maximalpegels liegt, so kann die nun folgende Druckänderung als Signal für den notwendigen sofortigen oder zeitlich verzögerten Unterbruch interpretiert werden. Sofern die Flüssigkeitszufuhr hingegen weit unterhalb des Maximalpegels erfolgt, so ist die erste Änderung des Druckverlaufs, die bei Erreichen des Pegels der Flüssigkeitszufuhr eintritt, zu ignorieren. In diesem Fall ist erst der Übergang von einem ansteigenden in einen flachen Druckverlauf als signifikante Änderung zu interpretieren.

Vorzugsweise erfasst die Steuereinheit nur signifikante Änderungen des Druckverlaufs, die zumindest für eine vorgegebene Zeitspanne anhalten und die entweder den Übergang des Druckverlaufs von einem ansteigenden Druck in einen zumindest annähernd konstanten Druck oder den Übergang von einem konstanten Druck in einen ansteigenden Druck betreffen. Auf diese Weise gelingt es, kurzfristige Druckänderungen, die auch durch Druckänderungen in der Hauptleitung verursacht werden können, von der Auswertung auszuschliessen. Beispielsweise können solche nicht relevante Druckänderungen von der Auswertung ausgeschlossen werden, indem das Ausgangssignal des Drucksensors in der Steuereinheit beispielsweise mittels eines Tiefpass-Filters gefiltert wird.

Die Messung des Druckes der Wassersäule erfolgt mittels eines Drucksensors, der zur Druckmessung in diesen Druckbereichen ausgelegt und an die Transferleitung abschliessbar ist. Vorzugsweise wird der Drucksensor nach dem Stellglied mit der Transferleitung verbunden, so dass der gemessene Druck, beispielsweise bei der Verwendung eines Druckreduzierventils, vom Druckabfall über dem Stellglied unabhängig ist. Sofern als Stellglied eine Pumpe verwendet wird, wird der Drucksensor nach derselben mit der Transferleitung verbunden.

Drucksensoren sind beispielsweise aus [3] bekannt und weisen vorzugsweise ein piezoelektrisches Element oder eine mit Dehnmessstreifen versehene Membran auf, auf die der Druck der in der Transferleitung geführten Flüssigkeit einwirken kann.

Die Steuereinheit umfasst beispielsweise der Betätigung der Steuereinheit dienende Eingabemittel, eine der Verarbeitung und Wandlung des Sensorsignals dienende Eingangseinheit, einen der Verarbeitung des Sensorsignals und der Abgabe von Steuersignalen dienenden Prozessor, sowie eine der Steuerung des Stellglieds dienende Ausgangseinheit. Vorzugsweise sind die genannten Einheiten innerhalb eines wasserdicht abgeschlossenen Gehäuses angeordnet, das fest mit der Transferleitung verbunden sein kann, so dass die mit dem Stellglied und dem Drucksensor sowie beidseits mit Anschlüssen versehene Transferleitung zusammen mit der Steuereinheit eine Einheit bildet. In einer weiteren vorzugsweisen Ausgestaltung ist innerhalb des Gehäuses ferner eine Stromversorgungseinheit angeordnet. Alternativ kann die Steuereinheit mit einer externen Stromquelle verbindbar sein.

Mittels der erfindungsgemässen Vorrichtung werden vorzugsweise Wassertanks befüllt. Mittels der erfindungsgemässen Vorrichtung ist es jedoch auch möglich, weitere Flüssigkeiten vorteilhaft in Tanks abzufüllen. Besonders vorteilhaft ist es, wenn solche Tanks mit Auffangbecken versehen sind, mittels dessen, die wenige überlaufende Flüssigkeit aufgefangen werden kann. Sofern Wasser abgefüllt wird, ist ein minimaler Überlauf nicht relevant. In der nachstehenden Detailbeschreibung wird der Einfachheit halber nur die Füllung von Wassertanks beschrieben.

Die Vorrichtung und das Verfahren sind zum Befüllen von beliebigen Tanks einsetzbar. Insbesondere dient die Vorrichtung dem Füllen von Tanks, die auf Transportmitteln, wie Eisenbahnen und Lastwagen vorgesehen sind. Die erfindungsgemässe Lösung kann jedoch auch in industriellen Anlagen, beispielsweise Brauereien, vorteilhaft eingesetzt werden, um die dort vorgesehenen Behälter automatisch zu füllen. Unter den Begriff "Tank" fallen daher beliebige abgeschlossene oder geöffnete Behälter.

Nachfolgend wird die Erfindung anhand von Zeichnungen näher erläutert. Dabei zeigt:
- Fig. 1: eine erfindungsgemässe Vorrichtung, mittels der Wasser aus einem Leitungssystem 1, 10 in einen in einem Eisenbahnwagen 80 vorgesehenen Wassertank 8 transferiert wird;
- Fig. 2: zwei verschiedene Druckverläufe V1, V2, die beim Füllen eines leeren und eines bereits teilweise gefüllten Tanks registriert wurden; und
- Fig. 3: die erfindungsgemässe Vorrichtung von Figur 1 beim Füllen des Tanks 8 eines Tanklastwagens 80.

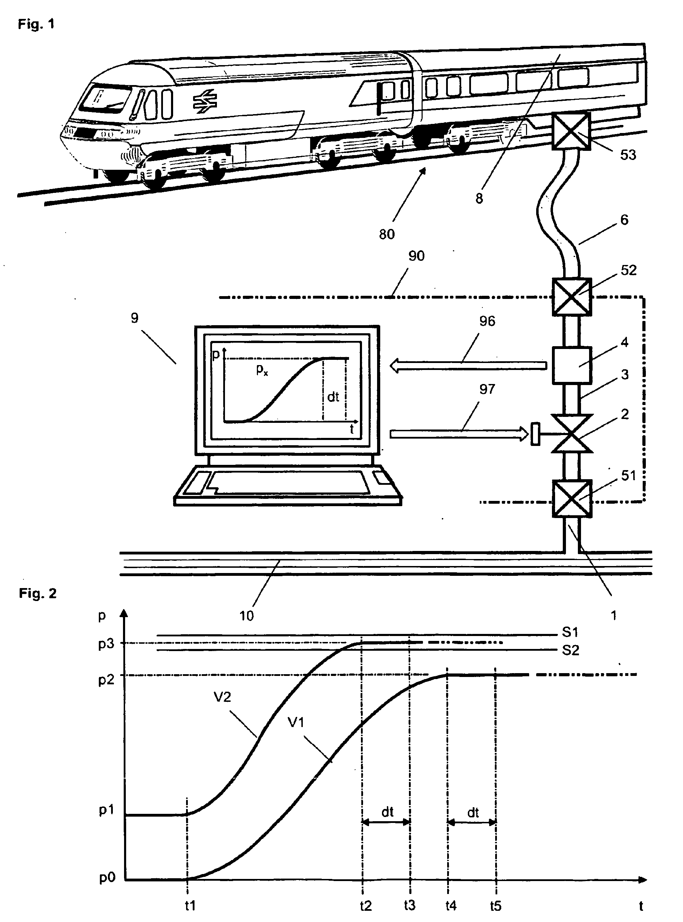

Fig. 1 zeigt eine erfindungsgemässe Vorrichtung, mittels der Wasser aus einem Leitungssystem 1, 10 in einen in einem Eisenbahnwagen 80 vorgesehenen Wassertank 8 transferiert wird. Die Vorrichtung umfasst eine Transferleitung 3, die einerseits an eine der Zufuhr von Wasser dienende Versorgungsleitung 1 oder Hauptleitung 10 und andererseits über Kopplungselemente 52, 6, 53 an den Wassertank 8 angeschlossen ist. Die Kopplungselemente 52, 6, 53 umfassen Anschlusselemente 52, 53, die durch einen flexiblen Wasserschlauch 6 miteinander verbunden sind.

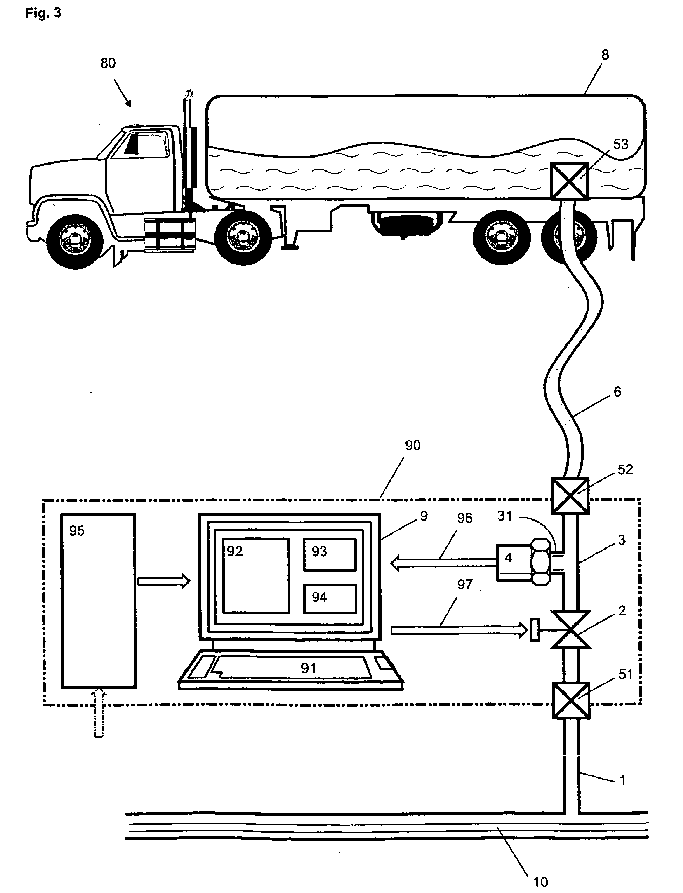

Die Transferleitung 3 ist ferner mit einem steuerbaren Stellglied 2 und einem Drucksensor 4 verbunden. Mittels des Stellglieds 2 ist der Wasserfluss in der Transferleitung 3 steuerbar. Beispielsweise ist ein steuerbares Ventil 2 vorgesehen, mittels dessen der Querschnitt der Transferleitung 3 wahlweise verschlossen oder geöffnet werden kann, wodurch passiv auf den Wasserfluss eingewirkt wird. In weiteren Ausgestaltungen kann eine Förderpumpe als Stellglied 2 verwendet werden, die Wasser aktiv aus einem Reservoir in die Transferleitung 3 fördert. Der Drucksensor 4, der vorzugsweise eine mit Dehnmessstreifen oder piezoelektrischen Elementen verbundene Membran aufweist, kann in einem Schraubenbolzen integriert sein, der in die Transferleitung 3 oder in ein seitlich daran vorgesehenes Anschlussstück 31 (siehe Figur 3) eingeschraubt wird, indem das Sensorelement nicht der Strömung, sondern nur den Druck ausgesetzt ist. Entsprechende Ausgestaltungen von Sensoren sind beispielsweise aus [4], WO 2007/123537 A1 bekannt.

Das Ausgangssignal des Drucksensors 4 wird über eine Messleitung 96 einer Steuereinheit 9 zugeführt, welche den Verlauf des Wasserdrucks überwacht, und das Stellglied 2 über eine Steuerleitung 97 für den Beginn des Flüssigkeit des entsprechend den Eingaben des Wartungspersonals und anschliessend entsprechend den Resultaten der Auswertung des Druckverlaufs betätigt.

Die Steuereinheit 9 ist lediglich schematisch in der Art eines Personalcomputers gezeigt, der nebst Prozessoreinheiten, Speichereinheiten, Schnittstelleneinheiten, sowie wenigstens einer Einheit zur Verarbeitung analoger Signale, eine Tastatur und einen Bildschirm aufweist. Die Steuereinheit 9 kann jedoch in jeder beliebigen anderen Ausgestaltung vorgesehen sein und im einfachsten Fall in einem vorzugsweise schlagfesten und wasserdichten Gehäuse 90 eingeschlossen sein, welches nur wenige Bedienelemente, beispielsweise einen oder mehrere Schalter und Signalleuchten, aufweist. In industriellen Anlagen, beispielsweise Brauereien, kann die Steuereinheit 9 hingegen auch Teil eines Leitrechners sein, welcher die laufenden Prozesse überwacht und vorgesehene Behälter 8 bedarfsweise neu füllt.

Wie dies auf dem Bildschirm der Steuereinheit 9 dargestellt ist, überwacht diese nach Beginn des Wassertransfers den Verlauf des vom Drucksensor 4 gemessenen Wasserdrucks p in der Transferleitung 3. Dieser Druck steigt während des Wassertransfers fast linear an und nimmt einen konstanten Wert pₓ an, sobald der Maximalpegel im Wassertank 8 erreicht ist und das Wasser überläuft. Wie dies in Figur 1 weiter gezeigt ist, wird von der Steuereinheit 9 vorzugsweise geprüft, ob der konstante Druck während einer vorgegebenen Zeitspanne dt anhält, um Steuerungsfehler zu vermeiden, die ansonsten durch kurzzeitig in der Hauptleitung 10 auftretende Druckänderungen verursacht werden könnten. Um solche Fehler zu vermeiden, kann das Ausgangssignal des Drucksensors 4 in einer Filterstufe gefiltert werden.

Fig. 2 zeigt zwei verschiedene Druckverläufe V1, V2, die beim Füllen eines leeren und eines bereits teilweise gefüllten Behälters bzw. Tanks 8 unterschiedlicher Grösse registriert wurden.

Der untere Verlauf V1 zeigt den beim Füllen eines leeren Tanks 8 registrierten Druckverlauf. Der Füllvorgang beginnt mit einem Anfangsdruck p0 zum Zeitpunkt t1. Anschliessend steigt der Druck praktisch linear an, bis der Druck p2 zum Zeitpunkt t4 erreicht ist. Zum Zeitpunkt t5 ist die optional vorgesehene Zeitspanne dt abgelaufen, ohne dass weitere Druckänderungen aufgetreten sind. Die zum Zeitpunkt t4 erfolgte und zum Zeitpunkt t5 verifizierte Druckänderung wird von der Steuereinheit 9 daher zum Anlass genommen, ein Steuersignal an das Stellglied 2 zu senden, um den Wassertransfer zu beenden.

Der obere Verlauf V2 zeigt den Druckverlauf, der beim Füllen eines bereits teilweise gefüllten, grösseren Tanks 8 registriert wurde. Aufgrund der vorhandenen teilweisen Füllung des Tanks 8 beginnt der Füllvorgang mit einem höheren Anfangsdruck p1 zum Zeitpunkt t1. Anschliessend steigt der Druck praktisch linear an, bis der Druck p3 zum Zeitpunkt t2 erreicht ist. Zum Zeitpunkt t3 ist die Zeitspanne dt abgelaufen, ohne dass weitere Druckänderungen aufgetreten sind. Die zum Zeitpunkt t2 erfolgte und zum Zeitpunkt t3 verifizierte Druckänderung wird von der Steuereinheit 9 daher wiederum zum Anlass genommen, das Stellglied 2 entsprechend zu betätigen.

Die Auswertung der vom Drucksensor 4 gelieferten Messsignale kann auf verschiedene Arten erfolgen. Beispielsweise kann die Steuereinheit einen der Auswertung des Signalverlaufs dienenden und entsprechend programmierten Signalprozessor aufweisen. Es können jedoch auch einfache Massnahmen angewendet werden. Beispielsweise wird wenigstens eine Schranke S1 vorgesehen, welche dem Ausgangssignal jeweils schrittweise voran geführt wird, wenn dieses die Schranke S1 erreicht. Nach jedem Schritt wird ein Zähler gestartet, mittels dessen geprüft wird, ob der Wert der vorgegebenen Zeitspanne dt überschritten wird, bevor das Ausgangssignal die Schranke S1 erreicht. Sofern die Schranke S1 nicht erreicht wird, liegt eine signifikante Änderung des Druckverlaufs vor, die eine entsprechende Steuerung des Stellglieds 2 zur Folge hat. Die Schrittweite wird entsprechend gewählt.

Möglich ist auch die Verwendung von zwei einen konstanten Abstand voneinander aufweisenden Schranken S1, S2, die dem Ausgangssignal nachgeführt werden. Dabei wird jeweils geprüft, ob das Ausgangssignal während der vorgegebenen Zeitspanne dt innerhalb der Schranken S1, S2 verbleibt.

Fig. 3 zeigt die erfindungsgemässe Vorrichtung von Figur 1 beim Füllen des Tanks 8 eines Tanklastwagens 80. Schematisch ist wiederum die Steuereinheit 9 mit den darin vorgesehenen Modulen 91, 92, 93 und 94 dargestellt. Anhand der Eingabemittel 91 kann das Wartungspersonal die Vorrichtung bedienen. Beispielsweise wird eine Taste oder ein Schalter betätigt, um den Wassertransfer sowie die Überwachungsfunktion der Steuereinheit 9 zu starten. Durch die Eingangseinheit 93 werden die vom Drucksensor 4 an die Messleitung 96 abgegebenen Signale empfangen und bearbeitet, gegebenenfalls gefiltert, und in bekannter Weise in digitale Daten umgewandelt. Vom Prozessor 92, vorzugsweise einem so genannten Single-Chip-Computer, werden die Daten entsprechend der erfindungsgemässen Lehre verarbeitet und Steuersignale gebildet, die an eine Ausgangseinheit 94 abgegeben werden, welche entsprechend den digitalen Daten analoge Treibersignale bildet, welche über die Steuerleitung 97 zum Stellglied 2 übertragen werden, um dieses entsprechend zu betätigen. Entsprechende Grundlagen findet der Fachmann in [5], U. Tietze, Ch. Schenk, Halbleiterschaltungstechnik, 11. Auflage, 1. Nachdruck, Springer Verlag, Berlin 1999, beispielsweise zu A/D- und D/A-Wandlern unter Seite 1202 und zum Thema Druckmessung unter Seite 1241 fünf.

### Literaturverzeichnis

[1] US 5'336'054
[2] JP 8127339 A
[3] Freescale Semiconductor, Inc., Liquid Level Control Using a Pressure Sensor, Application Note AN1516, Rev 4, 05/2005
[4] WO 2007/123537 A1
[5] U. Tietze, Ch. Schenk, Halbleiterschaltungstechnik, 11. Auflage, 1. Nachdruck, Springer Verlag, Berlin 1999

## Patentansprüche

1. Vorrichtung zum Füllen eines Flüssigkeitstanks (8), insbesondere eines Wassertanks, mit einer Transferleitung (3),
a) die an eine der Zufuhr von Flüssigkeit dienende Versorgungsleitung (1) anschliessbar ist,
b) die mit einem steuerbaren Stellglied (2), insbesondere einem Ventil oder einer Pumpe, versehen ist, welches dem aktiven oder passiven Eingriff in den Flüssigkeitsstrom dient, und
c) die über Kopplungselemente (52, 6, 53) an den Flüssigkeitstank (8) anschliessbar ist,
wobei ein Drucksensor (4) vorgesehen ist, der der Messung des Drucks der aus dem Stellglied (2) austretenden Flüssigkeit dient und dessen Ausgangssignal über eine Messleitung (96) einer Steuereinheit (9) zuführbar ist, die zur Überwachung des Druckverlaufs geeignet ist und die über eine Steuerleitung (97) mit dem Stellglied (2) verbunden ist, **dadurch gekennzeichnet, dass** nach der Detektion einer Phase ohne Druckänderung die Steuereinheit (9) das Stellglied (2) betätigt, um den Flüssigkeitstransfer zu beenden.

2. vorrichtung nach Anspruch 1, **dadurch gekennzeichnet, dass** die Steuereinheit (9) zur Erfassung einer Phase ohne Druckänderung geeignet ist, die zumindest für eine vorgegebene Zeitspanne anhält.

3. Vorrichtung nach Anspruch 1 oder 2, **dadurch gekennzeichnet, dass** der Drucksensor (4) vor oder nach dem Stellglied (2) mit der Transferleitung (3) verbunden ist.

4. Vorrichtung nach Anspruch 3, **dadurch gekennzeichnet, dass** der Drucksensor (4) ein piezoelektrisches Element oder eine mit Dehnmessstreifen versehene Membran aufweist, auf die der Druck der in der Transferleitung (3) geführten Flüssigkeit einwirken kann.

5. Vorrichtung nach einem der Ansprüche Ziffer 1-4, **dadurch gekennzeichnet, dass** die Transferleitung (3) an einer Stelle in den Flüssigkeitstank (8) angeschlossen ist, die unterhalb des Maximalpegels der Flüssigkeit liegt oder dass die Transferleitung (3) an einer Stelle in den Flüssigkeitstank (8) einmündet, die in einem Bereich vorzugsweise nahe unterhalb des Maximalpegels der Flüssigkeit liegt.

6. Vorrichtung nach einem der Ansprüche 1-5, **dadurch gekennzeichnet, dass** die Steuereinheit (9) Eingabemittel (91), einen Prozessor (92), Eingangseinheit (93) und eine der Steuerung des Stellglieds (2) dienende Ausgangseinheit (94) aufweist, die vorzugsweise innerhalb eines wasserdicht abgeschlossenen Gehäuses (90) angeordnet sind.

7. Vorrichtung nach Anspruch 6, **dadurch gekennzeichnet, dass** innerhalb des Gehäuses (90) ferner eine Stromversorgungseinheit (92) angeordnet ist, oder dass die Steuereinheit (9) mit einer externen Stromquelle verbindbar ist.

8. Verfahren zum Füllen eines Flüssigkeitstanks (8), insbesondere eines Wassertanks, für eine Vorrichtung nach einem der Ansprüche 1 bis 7, mit einer Transferleitung (3),
a) die an eine der Zufuhr von Flüssigkeit dienende Versorgungsleitung (1) angeschlossen ist,
b) die mit einem steuerbaren Stellglied (2), insbesondere einem Ventil oder einer Pumpe, versehen ist, welche aktive oder passiv in den Flüssigkeitsstrom eingreifen, kann, und
c) die über Kopplungselemente (52, 6, 53) an den Flüssigkeltstank (8) anschliessbar ist,
wobei der Druck der aus dem Stellglied (2) austretenden Flüssigkeit anhand eines Drucksensor (4) gemessen wird, dessen Ausgangssignal über eine Messleitung (96) einer Steuereinheit (9) zugeführt wird, die über eine Steuerleitung (97) mit dem Stellglied (2) verbunden ist,
und wobei anhand der Steuereinheit (9) der Druckverlauf überwacht wird, **daduch gekennzeichent, dass** nach der Detektion einer Phase ohne Druckänderung die Steuereinheit (9) das Stellglied (2) betätigt, um den Flüssigkeitstransfer zu unterbrechen.

9. Verfahren nach Anspruch 8, **dadurch gekennzeichnet, dass** die Steuereinheit (9) Phasen ohne Druckänderung erfasst, die zumindest für eine vorgegebenen Zeitspanne anhalten.

10. Verfahren nach Anspruch 8 oder 9, **dadurch gekennzeichnet, dass** die vom Drucksensor (4) abgegebenen Ausgangssignale vorzugsweise in einem Tiefpassfilter gefiltert werden

11. verfahren nach Anspruch 8, 9 oder 10, **dadurch gekennzeichnet, dass** wenigstens eine Schranke (S1) vorgesehen wird, welche dem Ausgangssignal jeweils schrittweise voran geführt wird, wenn dieses die Schranke (S1) erreicht, dass nach jedem Schritt ein Zähler gestartet wird, mittels dessen geprüft, wird, ob der Wert der vorgegebenen Zeitspanne überschritten wird, bevor das Ausgangssignal die Schranke (S1) erreicht, oder dass zwei einen konstanten Abstand voneinander aufweisende Schranken (S1, S2) dem Ausgangssignal nachgeführt werden und geprüft wird, ob das Ausgangssignal während der vorgegebenen Zeitspanne innerhalb der Schranken (S1, S2) verbleibt.

## Claims

1. Apparatus for filling a liquid tank, particularly a water tank, with a transfer tube (3),
a) that is connectable to a supply tube (1), which is serving for the supply of liquid;
b) that is provided with a controllable actuating element (2), particularly a valve or a pump, which serves for actively or passively intervening with the liquid flow; and
c) fittings (52, 6, 53) that are connectable to the liquid tank (8),
wherein a pressure sensor (4) is provided, which serves for measuring the pressure of the liquid that escapes the actuating element (2) and whose output signal can be feed via a measuring line (96) to a control unit (9), which is capable of observing the pressure curve and which is connected via a control line (97) to the actuating element (2), **characterised in that** after the detection of a phase without pressure change, the control unit (9) activates the actuating element (2) in order to terminate the liquid flow.

2. Apparatus according to claim 1, **characterised in that**, the control unit (9) is adapted to detect a phase without pressure change, that lasts for at least a predetermined time period.

3. Apparatus according to claim 1 or 2, **characterised in that** the pressure sensor (4) is connected to transfer tube (3) in front of or behind the actuating element (2).

4. Apparatus according to claim 3, **characterised in that** the pressure sensor (4) comprises a piezoelectric element or a membrane with a strain gauge, on which membrane the pressure of the liquid guided in the transfer tube (3) can act.

5. Apparatus according to one of the claims 1-4, **characterised in that** the transfer tube (3) is connected to the liquid tank (8) at position, which lies below the maximum level of the liquid or that the transfer tube (3) leads into the liquid tank (8) at a position that lies in the range preferably closely underneath the maximum level of the liquid.

6. Apparatus according to one of the claims 1-5, **characterised in that** the control unit (9) comprises input means (91), a processor (92), an input unit (93) and an output unit (94) serving for the control of the actuating element (2), which are preferably arranged within a watertight closed housing (90).

7. Apparatus according to claim 6, **characterised in that** within the housing (90) a power supply unit (92) is provided in addition, or that the control unit (9) is connectable to an external power supply.

8. Method for filling a liquid tank (8), particularly a water tank, for an apparatus according to one of the claims 1 to 7, with a transfer tube (3),
a) that is connectable to a supply tube (1), which is serving for the supply of liquid;
b) that is provided with a controllable actuating element (2), particularly a valve or a pump, which serves for actively or passively intervening with the liquid flow; and
c) fittings (52, 6, 53) that are connectable to the liquid tank (8),
wherein the pressure of the liquid that escapes the actuating element (2) is measured with a pressured sensor (4), whose output signal is fed via a measuring line (96) to a control unit (9), which is connected via a control line (97) to the actuating element (2), and wherein the pressure curve is observed by means of the control unit (9), **characterised in that** after the detection of a phase without pressure change, the control unit (9) activates the actuating element (2) in order to terminate the liquid flow.

9. Method according to claim 8, **characterised in that** the control unit (9) detects phases without pressure change, that lasts for at least a predetermined time period.

10. Method according to claim 8 or 9, **characterised in that** the output signals of the pressure sensor (4) are filtered preferably in a low pass filter.

11. Method according to claim 8, 9 or 10, **characterised in that** at least one treshold (S1) is provided, which is stepwise carried ahead of the output signal, each time when the output signal reaches the treshold (S1), that after each step a timer is started, by means of which it is checked, whether the value of the predetermined time period has been exceeded, before the output signal has reached the treshold (S1), or that two tresholds (S1, S2), which have a constant distance between one another, are tracking the output signal while it is checked, whether the output signal remains within the tresholds (S1, S2) during the predetermined time period.

## Revendications

1. Dispositif pour le remplissage d'un réservoir de liquide (8), en particulier un réservoir d'eau, avec une conduite de transfert (3),
a) qui peut être raccordée à une conduite d'alimentation (1) servant à l'amenée de liquide,
b) qui est munie d'un organe de réglage commandable (2) en particulier une soupape ou une pompe qui sert à l'intervention passive ou active dans le courant de liquide, et
c) qui est raccordable par des éléments d'accouplement (52, 6, 53) au réservoir de liquide (8).
un capteur de pression (4) étant prévu qui sert à mesurer la pression du liquide sortant de l'organe de réglage (2) et dont le signal de sortie peut être amené par une ligne de mesure (96) à une unité de commande (9) qui est appropriée pour la surveillance de la courbe de pression et qui est reliée par une ligne de commande (97) à un organe de réglage (2), **caractérisé en ce qu'**après la détection d'une phase sans modification de pression, l'unité de commande (9) actionne l'organe de réglage (2) pour terminer le transfert de liquide.

2. Dispositif selon la revendication 1, **caractérisé en ce que** l'unité de commande (9) est prévue pour la détection d'une phase sans modification de pression, qui est maintenue au moins pour un intervalle de temps prédéterminé.

3. Dispositif selon la revendication 1 ou 2, **caractérisé en ce que** le capteur de pression (4) est relié à la ligne de transfert (3) avant ou après l'organe de réglage (2).

4. Dispositif selon la revendication 3, **caractérisé en ce que** le capteur de pression (4) présente un élément piézoélectrique ou une membrane munie de bandelettes de mesure extensibles sur lesquelles peut agir la pression du liquide guidé dans la ligne de transfert (3).

5. Dispositif selon l'une des revendications 1 à 4, **caractérisé en ce que** la ligne de transfert (3) est raccordée à un endroit dans le réservoir de liquide (8) qui se trouve en dessous du niveau maximal de liquide, ou en ce que la ligne de transfert (3) débouche dans le réservoir de liquide (8) à un endroit qui se trouve dans une zone de référence juste en dessous du niveau maximal du liquide.

6. Dispositif selon l'une des revendications 1 à 5, **caractérisé en ce que** l'unité de commande (9) présente des moyens de saisie (91), un processeur (92), une unité de saisie (93) et une unité de sortie (94) servant à la commande de l'organe de réglage (2), qui sont de préférence disposés à l'intérieur d'un coffret hermétique et étanche (90).

7. Dispositif selon la revendication 6, **caractérisé en ce qu'**à l'intérieur du coffret (90), il est en outre disposé une unité d'alimentation de courant (9) ou **en ce que** l'unité de commande (9) est reliable à une source de courant externe.

8. Procédé pour le remplissage d'un réservoir de liquide (8), en particulier un réservoir d'eau pour un dispositif selon l'une des revendications 1 à 7, avec une ligne de transfert (3),
a) qui peut être raccordée à une conduite d'alimentation (1) servant à l'amenée de liquide,
b) qui est munie d'un organe de réglage commandable (2) en particulier une soupape ou une pompe qui sert à l'intervention passive ou active dans le courant de liquide, et
c) qui est raccordable par des éléments d'accouplement (52, 6, 53) au réservoir de liquide (8).
la pression du liquide sortant de l'organe de réglage (2) étant mesurée à l'aide d'un capteur de pression (4) dont le signal de sortie est amené à une ligne de mesure (96) d'une unité de commande (9) qui est reliée par une ligne de commande (97) à l'organe de réglage (2) et la courbe de pression étant surveillée à l'aide de l'unité de commande (9) **caractérisé en ce qu'**après la détection d'une phase sans changement de pression, l'unité de commande (9) actionne l'organe de réglage (2) pour interrompre le transfert de liquide.

9. Procédé selon la revendication 8, **caractérisé en ce que** l'unité de commande (9) détecte des phases sans modification de pression qui est maintenue au moins pour un intervalle de temps prédéterminé.

10. Procédé selon la revendication 8 ou 9, **caractérisé en ce que** les signaux de sortie émis par le capteur de pression (4) sont filtrés de préférence dans un filtre passe-bas.

11. Procédé selon la revendication 8, 9 ou 10 **caractérisé en ce qu'**il est prévu au moins un seuil (S1) qui précède le signal de sortie respectivement par étape, quand celui-ci atteint la barrière (S1), **en ce qu'**après chaque étape, un compteur est démarré au moyen duquel il est vérifié si la valeur de l'intervalle de temps prédéterminé est dépassée avant que le signal atteigne le seuil (S1) ou que deux seuils présentant une distance constante entre eux (S1, S2) sont suivis le signal de sortie et il est vérifié que le signal de sortie reste pendant l'intervalle de temps prédéterminé à l'intérieur des seuils (S1, S2).
